# EUROPEAN PATENT SPECIFICATION

(11) **EP 4 135 286 B1**
(45) Date of publication and mention of the grant of the patent: **18.06.2025**
(21) Application number: 21799468.0
(22) Date of filing: 28.04.2021
(51) Int. Cl.: H04L 69/40, H04L 12/46, H04L 61/103, H04L 65/1045, H04L 65/1069, H04L 101/622, H04L 45/28

(54) **PROTECTION SWITCHING METHOD AND APPARATUS**
SCHUTZSCHALTUNGSVERFAHREN UND -VORRICHTUNG
PROCÉDÉ ET APPAREIL DE COMMUTATION DE PROTECTION

(30) Priority: 07.05.2020 CN 202010378954
(43) Date of publication of application: 15.02.2023
(73) Proprietor: Huawei Technologies Co., Ltd., Shenzhen, Guangdong 518129 (CN)
(72) Inventor: LIANG, Bo, Shenzhen, Guangdong 518129 (CN); HUANG, Lei, Shenzhen, Guangdong 518129 (CN)
(74) Representative: Gill Jennings & Every LLP
(86) International application number: PCT/CN2021/090679
(87) International publication number: WO 2021/223646

(56) References cited:
- CN-A- 101 110 746
- CN-A- 101 155 076
- CN-A- 101 267 360
- CN-A- 101 345 686
- CN-A- 105 790 996
- CN-A- 110 022 262
- US-A1- 2008 285 466
- US-B1- 10 250 552
- US-B2- 9 755 958

## Description

### TECHNICAL FIELD

This application relates to the communication field, and in particular, to a protection switching method and an apparatus.

### BACKGROUND

In a communication network, a data transmission path group may be usually configured for specific traffic. When one data transmission path in the data transmission path group fails, a traffic flow may be switched to another data transmission path for transmission. In this way, continuity of the traffic can be ensured.

An operator may use a network device operating at a data link layer and a network device operating at a network layer to perform hybrid networking for the communication network. The network device operating at the data link layer is also referred to as a layer-2 device. The layer-2 device may forward, based on a media access control (media access control, MAC) address included in a data packet received by the layer-2 device, the data packet received by the layer-2 device. The network device operating at the network layer may also be referred to as a layer-3 device. The layer-3 device may forward, based on an Internet protocol (internet protocol, IP) address included in a data packet received by the layer-3 device, the data packet received by the layer-3 device. That is, the layer-2 device and the layer-3 device respectively forward the data packet received by the layer-2 device and the data packet received by the layer-3 device by using different communication protocols.

Usually, the layer-2 device and the layer-3 device separately perform failure detection on a data transmission path by using different methods, and the layer-2 device and the layer-3 device cannot cooperatively perform protection switching. US 10,250,552 B1 discusses how EVPN can be used to offer a multi-homed L3VPN service leveraging its Layer 2 access redundancy.

### SUMMARY

Embodiments of this application provide a protection switching method and an apparatus. A layer-2 device and a layer-3 device can cooperatively perform protection switching. This facilitates a MAC switched domain and an IP routing domain to better implement traffic interconnection. The invention is defined by the independent claims. Further embodiments of the invention are defined by the dependent claims. Although the invention is only defined by the claims, the below embodiments, examples and aspects are present for aiding in understanding the background and advantages of the invention.

### BRIEF DESCRIPTION OF DRAWINGS

The following briefly describes accompanying drawings used in descriptions of embodiments or the conventional technology.
FIG. 1 is a schematic diagram of a traffic scenario to which a technical solution according to an embodiment of this application is applicable;
FIG. 2 is a flowchart of a protection switching method according to an embodiment of this application;
FIG. 3A and FIG. 3B are a schematic diagram of a process in which a layer-2 device and a layer-3 device cooperatively perform protection switching according to an embodiment of this application;
FIG. 4 is a schematic diagram of a process in which a layer-3 device and a layer-2 device establish a BFD session according to an embodiment of this application;
FIG. 5 is a schematic diagram of a structure of a communication apparatus according to an embodiment of this application;
FIG. 6 is a schematic diagram of a structure of another communication apparatus according to an embodiment of this application; and
FIG. 7 is a schematic diagram of a structure of a network device according to an embodiment of this application.

### DESCRIPTION OF EMBODIMENTS

The following describes the technical solutions in embodiments of this application with reference to the accompanying drawings in embodiments of this application.

An operator may use a layer-2 device and a layer-3 device to perform hybrid networking for a communication network. The layer-2 device is a network device that operates at a data link layer, for example, a switch. When receiving a data packet from another device, the layer-2 device may forward the data packet based on a MAC address included in the data packet. The layer-3 device is a network device that operates at a network layer, for example, a router. When receiving a data packet from another device, the layer-3 device may forward the data packet based on an IP address included in the data packet.

It should be noted that a network device may have both a capability of the layer-2 device and a capability of the layer-3 device. For example, some switches may have both the capability of the layer-2 device and the capability of the layer-3 device. If the network device has both the capability of the layer-2 device and the capability of the layer-3 device, the network device may be configured to forward a data packet based on a MAC address included in the data packet received by the network device, or may be configured to forward a data packet based on an IP address included in the data packet received by the network device.

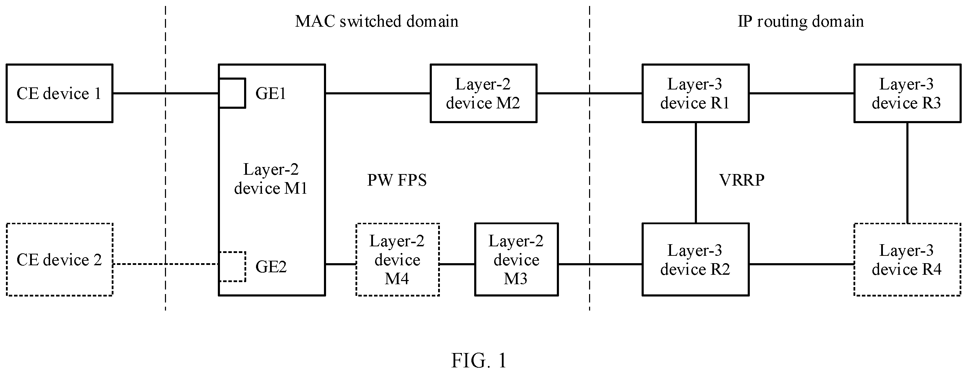

FIG. 1 is a schematic diagram of a traffic scenario to which a technical solution according to an embodiment of this application is applicable. As shown in FIG. 1, a communication network includes one or more CE devices, a MAC switched domain, and an IP routing domain. The MAC switched domain includes a plurality of layer-2 devices, and the IP routing domain includes a plurality of layer-3 devices. Data transmission paths between both of a layer-2 device M2 and a layer-2 device M3 and the IP routing domain include: a data transmission path between the layer-2 device M2 and a layer-3 device R1 and a data transmission path between the layer-2 device M3 and a layer-3 device R2. When any of the data transmission paths fails, protection switching may be performed on protected target traffic, and a traffic flow that belongs to the target traffic is transmitted through another data transmission path that does not fail, to ensure continuity of the traffic to which the traffic flow belongs. It may be understood that the traffic flow that belongs to the target traffic is one or more data packets that belong to the target traffic.

In this embodiment of this application, a layer-2 device M1 is also referred to as a first network device. The layer-2 device M2 and the layer-2 device M3 are also referred to as second network devices. The layer-3 device R1 and the layer-3 device R2 are also referred to as third network devices. A layer-3 device R3 is also referred to as a fourth network device.

It may be understood that one or more interfaces configured to connect to the CE device may be configured for the first network device. When a plurality of interfaces configured to connect to the CE device are configured for the first network device, different CE devices may be connected. As shown in FIG. 1, an interface GE1 and an interface GE2 are configured for the layer-2 device M1, so that the layer-2 device M1 is connected to a CE device 1 through the interface GE1 and is connected to a CE device 2 through the interface GE2.

It may be understood that a data transmission path between the first network device and the second network device may include one or more layer-2 devices. As shown in FIG. 1, the layer-2 device M1 and the layer-2 device M2 are directly connected. However, a data transmission path between the layer-2 device M1 and the layer-2 device M3 further includes a layer-2 device M4. Similarly, a data transmission path between the third network device and the fourth network device may include one or more layer-3 devices. As shown in FIG. 1, the layer-3 devices R1 and R3 are directly connected. However, a data transmission path between the layer-3 devices R2 and R3 further includes a layer-3 device R4.

In the communication network obtained through hybrid networking by using the layer-2 device and the layer-3 device, when failure detection is performed on a data transmission path, segmented detection may be usually performed on the MAC switched domain and the IP routing domain. That is, in the traffic scenario shown in FIG. 1, the layer-2 device in the MAC switched domain and the layer-3 device in the IP routing domain may separately perform failure detection on the data transmission path by using different methods. The MAC switched domain and the IP routing domain usually use different protection switching technologies. For example, the MAC switched domain performs protection switching by using a PW fast protection switching (fast protection switching, FPS) technology, and the IP routing domain performs protection switching by using a virtual router redundancy protocol (virtual router redundancy protocol, VRRP) technology. Consequently, devices in the two domains do not perceive each other's failures, and cooperative protection switching cannot be performed.

For example, when the layer-3 device R1 in the IP routing domain fails and another layer-3 device connected to the layer-3 device R1 performs protection switching, the layer-2 device M1 in the MAC switched domain cannot perceive a failure of the layer-3 device R1 and does not timely perform protection switching. In this way, after the layer-3 device (for example, the layer-3 device R2 or the layer-3 device R3 connected to the layer-3 device R1) in the IP routing domain performs protection switching, a traffic flow that belongs to specific traffic may be received and/or transmitted through a data transmission path between the R2 and the M3, and the traffic flow that belongs to the traffic is no longer received or transmitted through a data transmission path between the R1 and the M2. However, because the layer-2 device M1 cannot perceive the failure of the layer-3 device R1, and the layer-2 device M1 and the layer-3 device fail to cooperatively perform protection switching, the layer-2 device M1 may still receive and/or transmit, through a data transmission path between the layer-2 device M1 and the layer-2 device M2, the traffic flow that belongs to the traffic. Consequently, the MAC switched domain and the IP routing domain cannot efficiently implement traffic interconnection.

To resolve the foregoing problem, embodiments of this application provide at least a protection switching method and an apparatus. In this method, a layer-2 device (a first network device) connected to a CE device receives an ARP message from the CE device, and obtains a VLAN identifier and an IP address of the CE device from the ARP message. Then, for target traffic determined based on the VLAN identifier, the first network device determines a data transmission path group associated with the target traffic. The data transmission path group includes data transmission paths between two layer-2 devices (two second network devices) included in a MAC switched domain and the first network device, and the two second network devices are connected to two layer-3 devices (third network devices) included in an IP routing domain in a one-to-one correspondence. Then, one of the third network devices may be used as a target network device to establish a first BFD session that uses the IP address of the CE device and an IP address of the target network device as session addresses, and transmit, to the first network device, a first BFD control message used to indicate that the first BFD session is in a connection establishment state. When the first network device does not receive the first BFD control message within a preset quantity of consecutive time intervals, it indicates that a data transmission path between the target network device and the first network device fails. Consequently, a traffic flow of the target traffic may not be transmitted through a first data transmission path that is in the data transmission path group and that is used to transmit the first BFD control message. The first network device may receive and/or transmit, through a second data transmission path other than the first data transmission path in the data transmission path group, a data packet that belongs to the target traffic. In this way, the layer-2 device connected to the CE device can perceive a failure of the layer-3 device that is in the IP routing domain and that is connected to the layer-2 device, and perform protection switching on the target traffic based on the failure perceived by the layer-2 device, so that the layer-2 device in the MAC switched domain and the layer-3 device in the IP routing domain can cooperatively perform protection switching. This facilitates the IP routing domain and the MAC switched domain in a communication network to better implement target traffic interconnection.

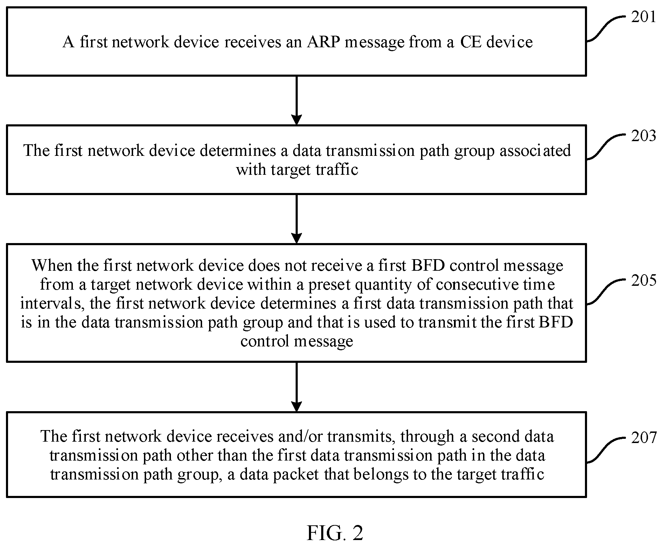

FIG. 2 is a flowchart of a protection switching method according to an embodiment of this application. As shown in FIG. 2, the method may include at least the following steps:
Step 201: A first network device receives an ARP message from a CE device.

The ARP message includes an IP address of the CE device and a VLAN identifier. More specifically, a source IP address of the ARP message is the IP address of the CE device, and the ARP message may further include the VLAN identifier.

Step 203: The first network device determines a data transmission path group associated with target traffic.

The target traffic is determined based on the VLAN identifier included in the ARP message. The data transmission path group includes data transmission paths between two second network devices and the first network device.

Step 205: When the first network device does not receive a first BFD control message from a target network device within a preset quantity of consecutive time intervals, the first network device determines a first data transmission path that is in the data transmission path group and that is used to transmit the first BFD control message.

The first BFD control message is used to indicate that a first BFD session is in a connection establishment state. Session addresses of the first BFD session include the IP address of the CE device and an IP address of the target network device. After establishing the first BFD session, the target network device may periodically transmit the first BFD control message to the first network device at a corresponding time interval. When the first network device does not receive the first BFD control message from the target network device within the preset quantity of consecutive time intervals, it indicates that the target network device may fail. Consequently, a traffic flow that belongs to the target traffic may not be transmitted through the first data transmission path that is in the data transmission path group and that is used to transmit the first BFD control message.

Step 207: The first network device receives and/or transmits, through a second data transmission path other than the first data transmission path in the data transmission path group, a data packet that belongs to the target traffic.

According to this embodiment of this application, when a layer-3 device that is in an IP routing domain and that is configured to connect to a layer-2 device fails, another layer-3 device that is in the IP routing domain and that is connected to the layer-3 device may perceive a failure of the layer-3 device, and the another layer-3 device may perform protection switching based on the failure perceived by the another layer-3 device. In addition, the layer-2 device connected to the CE device can perceive the failure of the layer-3 device that is in the IP routing domain and that is connected to the layer-2 device, and perform protection switching based on the failure perceived by the layer-2 device. Finally, the layer-2 device and the layer-3 device cooperatively perform protection switching. This facilitates a MAC switched domain and the IP routing domain to implement target traffic interconnection.

In a possible implementation, a user may configure, in an actual application scenario, the layer-2 device configured to connect to the CE device, so that the layer-2 device performs, on a specific CE device, the protection switching method provided in this embodiment of this application.

In some embodiments, a corresponding "BFD session proxy enable" function and/or "BFD session synchronization function" is configured for each interface that is in the layer-2 device and that is configured to connect to the CE device. The layer-2 device determines, based on an operation performed by the user on the interface, whether to enable BFD session proxy or BFD session synchronization for the interface.

In some embodiments, for each interface that is in the layer-2 device and that is configured to connect to the CE device, the layer-2 device determines, based on configuration information from another communication device or configuration information that is preset in the layer-2 device, whether to enable BFD session proxy or BFD session synchronization for the interface.

For each interface that is in the layer-2 device and that is configured to connect to the CE device, if BFD session proxy is enabled for the interface, the layer-2 device replaces, based on the IP address of the CE device connected to the interface, the CE device connected to the interface to establish a BFD session with the layer-3 device in the IP routing domain, perceives the failure of the layer-3 device based on the BFD session, and performs protection switching when it is perceived that the layer-3 device may fail.

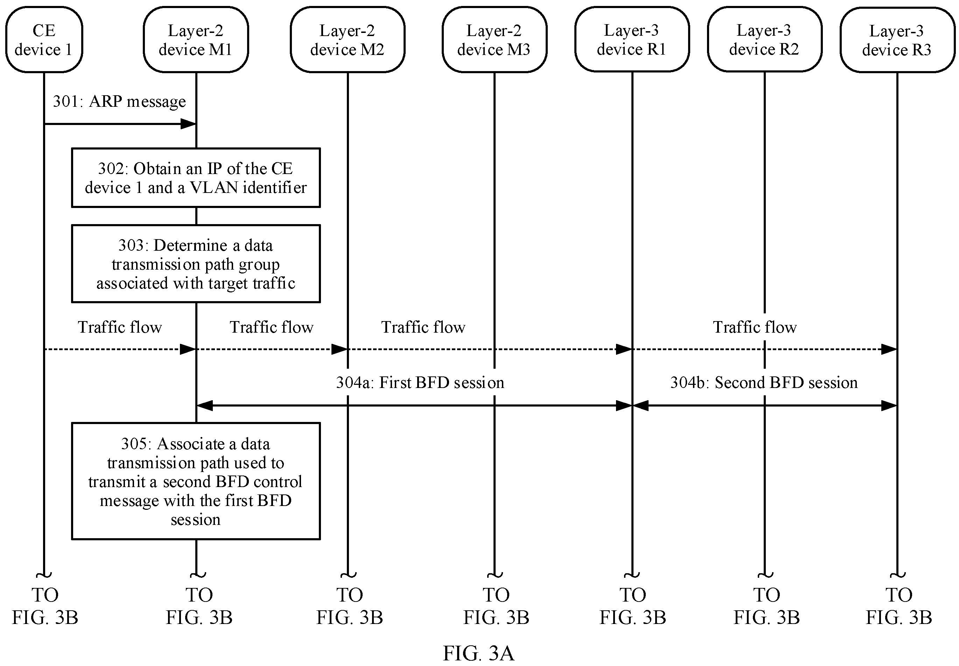

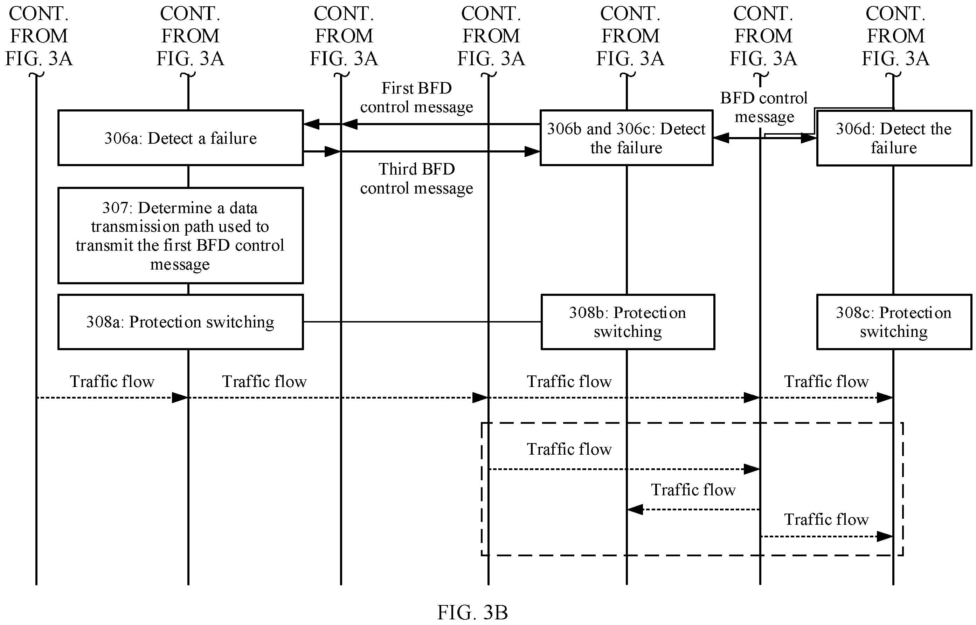

The traffic scenario shown in FIG. 1 is used as an example. If the layer-2 device M1 determines to enable BFD session proxy for the interface GE1, the layer-2 device M1 and the layer-3 device in the IP routing domain may cooperatively perform protection switching based on a process shown in FIG. 3A and FIG. 3B.

When the layer-2 device M1 determines to enable BFD session proxy for the interface GE1, the layer-2 device M1 may perform a step 301 to receive an ARP message from the CE device 1 connected to the interface GE1.

It may be understood that the CE device 1 is a layer-3 device that operates at a network layer, and the CE device 1 may broadcast the ARP message to a VLAN, for example, broadcast an ARP request or an ARP response to the VLAN. A source IP address of the ARP message is an IP address of the CE device, and the ARP message further includes a VLAN identifier of the VLAN.

In some embodiments, the layer-2 device M1 may match, based on an access control list (access control list, ACL), a format of a message received by the interface GE1, to determine whether the message is the ARP message from the CE device 1.

If the message received by the interface GE1 is the ARP message from the CE device 1, the layer-2 device M1 may perform a step 302 for the ARP message, and obtain the IP address of the CE device 1 and the VLAN identifier from the ARP message.

In some embodiments, the layer-2 device M1 may parse the ARP message, and obtain the source IP address of the ARP message from an IP header of the ARP message and obtain the VLAN identifier from the ARP message, where the source IP address of the ARP message is the IP address of the CE device 1.

It may be understood that if the layer-2 device M1 determines to enable BFD session proxy for the interface GE2, the layer-2 device M1 may alternatively perform a process similar to the step 301 and the step 302 for the interface GE2. If the layer-2 device M1 does not determine to enable BFD session proxy for the interface GE2, and does not determine to enable BFD session synchronization for the interface GE2, the layer-2 device M1 does not need to perform a processing process similar to the step 301 and the step 302 for the interface GE2, thereby preventing load of the layer-2 device M1 from being excessively high.

In some embodiments, the layer-2 device M1 may further record, into an attribute information table, an identifier of the interface configured to receive the ARP message, and the IP address of the CE device and the VLAN identifier that are included in the ARP message. In this way, in a subsequent process, target traffic that needs to be protected and a data transmission path group associated with the target traffic are determined based on information recorded in the attribute information table, and the layer-2 device M1 replaces the CE device to establish a first BFD session with the layer-3 device in the IP routing domain.

For example, if the identifier of the interface GE1 is GE1, the IP address of the CE device 1 that is included in the ARP message received by the interface GE1 is CE_IP1, and the VLAN identifier included in the ARP message is VLAN_1. The layer-2 device M1 may maintain the attribute information table shown in the following Table 1.

**Table 1**

| Serial number | IP of a CE device | VLAN identifier | Interface identifier |
|---|---|---|---|
| 1 | CE_IP1 | VLAN_1 | GE1 |
| 2 | ... | ... | ... |

It should be noted that the fields such as the serial number, the IP of a CE device, the VLAN identifier, and the interface identifier in Table 1, and the field values under the fields are merely used to assist in describing the technical solution provided in this embodiment of this application. In an actual application, the fields and the field values may be replaced with real values.

Then the layer-2 device M1 may perform a step 303 to determine the data transmission path group associated with the target traffic.

The data transmission path group may include a data transmission path between the layer-2 device M1 and the layer-2 device M2, and a data transmission path between the layer-2 device M1 and the layer-2 device M3.

The target traffic may be determined based on the VLAN identifier included in the ARP message. Alternatively, the target traffic may be determined based on the VLAN identifier included in the ARP message and the interface configured to receive the ARP message.

In some embodiments, the layer-2 device M1 may further configure one data transmission path in the data transmission path group as a main data transmission path, and configure another data transmission path in the data transmission path group as a standby data transmission path. A traffic flow that belongs to the target traffic is received and/or transmitted through the main data transmission path.

In some embodiments, depending on a protection switching technology supported by the layer-2 device M1, the data transmission path group associated with the target traffic may include but is not limited to a PWG, a VLAN transmission path group, or an SVLAN transmission path group. That is, the data transmission paths between both of the layer-2 device M2 and the layer-2 device M3 and the layer-2 device M1 each may include a PW, a VLAN transmission path, or an SVLAN transmission path.

For example, the layer-2 device M1 maintains the attribute information table shown in Table 1, and supports PW FPS. For the target traffic determined based on the VLAN identifier "VLAN_1" and the interface identifier "GE1", the layer-2 device M1 may configure a PWG associated with the target traffic for the target traffic, where the PWG may include a PW between the layer-2 device M1 and the layer-2 device M2, and a PW between the layer-2 device M1 and the layer-2 device M3. For ease of description, the following records the PW between the layer-2 device M1 and the layer-2 device M2 as PW1, and records the PW between the layer-2 device M1 and the layer-2 device M3 as PW2.

For example, the PW1 and the PW2 are respectively configured as a main PW and a standby PW. When receiving the traffic flow that comes from the CE device 1 and that belongs to the target traffic, the layer-2 device M1 encapsulates the traffic flow into the PW1, and transmits the traffic flow to the layer-2 device M2 through the PW1. Then the layer-2 device M2 transmits the traffic flow to the layer-3 device R1, so that the layer-3 device R1 further forwards the traffic flow. For example, the layer-3 device R1 forwards the traffic flow to the layer-3 device R3.

It may be understood that a traffic flow that comes from the layer-3 device R3 and that belongs to the target traffic may be transmitted to the CE device 1 by using the layer-3 device R1, the layer-2 device M2, and the layer-2 device M1 sequentially.

The layer-3 device R1 or the layer-3 device R2 in the IP routing domain may be used as a target network device to establish the first BFD session that uses the IP address of the CE device 1 connected to the interface GE1 and an IP address of the target network device as session addresses. For example, the target network device is the layer-3 device R1. The layer-3 device R1 may cooperate with the layer-2 device M1 to complete a step 304a, to establish the first BFD session that uses an IP address of the layer-3 device R1 and the IP address of the CE device 1 as session addresses.

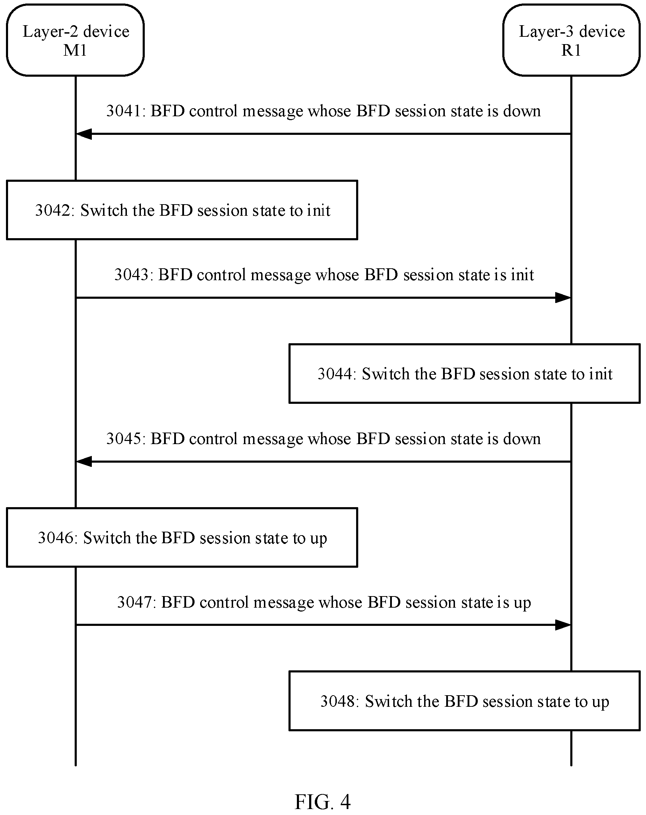

FIG. 4 is a schematic diagram of a process in which the layer-3 device R1 and the layer-2 device M1 establish the first BFD session. For ease of description, when a session state is down, it indicates that a BFD session is in a connection interrupted state; when a session state is up, it indicates that a BFD session is in a connection establishment state; and when a session state is init, it indicates that a BFD session is in an initial state.

The layer-3 device R1 serving as the target network device may first start a state machine of the first BFD session, and record a session state of the first BFD session by using the state machine. Herein, the session state recorded by the state machine may be first set to down, and then a step 3041 is performed to transmit a BFD control message whose session state is down to the layer-2 device M1.

A destination IP address of the BFD control message is the IP address of the CE device 1, and a source IP address of the BFD control message is the IP address of the layer-3 device R1. For ease of description, the BFD control message is also referred to as a second BFD control message in this embodiment of this application.

Because a layer-2 device correspondingly connected to the layer-3 device R1 is M2, the second BFD control message is first transmitted to the layer-2 device M2 correspondingly connected to the layer-3 device R1. The second BFD control message is encapsulated into the data transmission path between the M2 and the M1 by the layer-2 device M2, and then is transmitted to the layer-2 device M1 through the data transmission path between the layer-2 device M2 and the layer-2 device M1.

Because the layer-2 device M1 determines to enable BFD session proxy for the interface GE1, when receiving a data packet from the IP routing domain, the layer-2 device M1 may detect, based on the IP address of the CE device 1 connected to the interface GE1, whether the data packet is the second BFD control message to be transmitted to the CE device 1. It may be understood that the BFD control message has a specific structure. The layer-2 device M1 may match a data structure of the data packet from the IP routing domain, to detect whether the data packet is a BFD control message, and further determine whether the data packet is the second BFD control message to be transmitted to the CE device 1.

If the data packet is the second BFD control message to be transmitted to the CE device 1, the second BFD control message is responded to establish the first BFD session. For example, when receiving the data packet from the IP routing domain, the layer-2 device M1 may query Table 1 recorded by the layer-2 device M1 to determine whether the IP address of the CE device is the same as a destination IP address of the data packet. If the IP address of the CE device is the same as the destination IP address of the data packet, whether the data packet is a BFD control message whose session state is down is determined. Then, if the data packet is a BFD control message whose session state is down, the layer-2 device M1 may obtain a source IP address and a destination IP address of the second BFD control message, to obtain the IP address of the layer-3 device R1 and the IP address of the CE device 1. Then, the layer-2 device M1 responds to the second BFD control message based on the IP address of the layer-3 device R1 and the IP address of the CE device 1, and establishes the first BFD session with the layer-3 device R1.

Specifically, that the layer-2 device M1 responds to the second BFD control message may include but is not limited to that the layer-2 device M1 and the layer-3 device R1 cooperate to complete the following steps 3042 to 3048.

In the step 3042, the layer-2 device M1 switches the session state of the first BFD session to init.

Specifically, when receiving the second BFD control message, the layer-2 device M1 may start the state machine of the first BFD session, and record the session state of the first BFD session by using the state machine. Herein, the session state recorded by the state machine may be first set to down, and then the session state recorded by the state machine is switched from down to init.

In the step 3043, the layer-2 device M1 transmits a BFD control message whose session state is init to the layer-3 device R1.

A destination IP address of the BFD control message is the IP address of the layer-3 device R1 in the second BFD control message, and a source IP address is the IP address that is of the CE device 1 and that is obtained by the layer-2 device M1 from the second BFD control message.

After receiving the BFD control message that comes from the layer-2 device M1 and whose session state is init, the layer-3 device R1 may perform the step 3044 to switch the session state of the first BFD session to init.

Specifically, the layer-3 device R1 may update the state machine of the first BFD session, and switch the session state recorded by the state machine from down to init.

In the step 3045, the layer-3 device R1 transmits the BFD control message whose session state is init to the layer-2 device M1.

The layer-2 device M1 may continuously listen to the BFD control message whose destination IP address is the IP address of the CE device 1, whose source IP address is the IP address of the layer-3 device R1, and whose session state is init. After the layer-2 device M1 successfully listens to the BFD control message, the step 3046 may be performed to switch the session state of the first BFD session to up. Specifically, the layer-2 device M1 may update the state machine of the first BFD session, and switch the session state recorded by the state machine from init to up.

After the layer-2 device M1 switches the session state of the first BFD session to up, the layer-2 device M1 completes establishment of the first BFD session, and may perform the step 3047, to transmit a BFD control message whose session state is up to the layer-3 device R1. A source IP address of the BFD control message is the IP address of the CE device 1, and a destination IP address of the BFD control message is the IP address of the layer-3 device R1.

After receiving the BFD control message whose destination IP address is the IP address of the layer-3 device R1, whose source IP address is the IP address of the CE device 1, and whose session state is up, the layer-3 device R1 may perform the step 3048 to switch the session state of the first BFD session to up.

Specifically, the layer-3 device R1 may update the state machine of the first BFD session, and switch the session state recorded by the state machine from init to up, to complete establishment of the first BFD session.

In some embodiments, for the BFD control message transmitted by the R1 to the CE device 1, the layer-2 device M1 may terminate the BFD control message after processing the BFD control message. That is, after processing the BFD control message transmitted by the R1 to the CE device 1, the layer-2 device M1 may discard the BFD control message, and no longer forward the BFD control message to the CE device 1 connected to the interface GE1.

In this embodiment of this application, the layer-3 device R1 may further establish a second BFD session with another layer-3 device. As shown in FIG. 3A and FIG. 3B, the layer-3 device R1 may further cooperate with the layer-3 device R3 to complete a step 304b, and establish the second BFD session that uses the IP address of the layer-3 device R1 and an IP address of the layer-3 device R3 as session addresses. A process in which the layer-3 device R1 establishes the second BFD session with the layer-3 device R3 is similar to a process that is shown in FIG. 4 and in which the layer-3 device R1 establishes the first BFD session with the layer-2 device M1. The process in which the layer-3 device R1 establishes the second BFD session with the layer-3 device R3 is not described herein in detail again.

After the layer-2 device M1 receives the second BFD control message from the layer-3 device R1, or after the layer-2 device M1 establishes the first BFD session with the layer-3 device R1, the layer-2 device M1 may further perform a step 305 to determine a data transmission path that is in the data transmission path group and that is used to transmit the second BFD control message, and associate the data transmission path used to transmit the second BFD control message with the first BFD session.

In some embodiments, the layer-2 device M1 may associate the two session addresses of the first BFD session with the data transmission path used to transmit the second BFD control message. More specifically, the IP address of the CE device 1 and the IP address of the layer-3 device R1 may be associated with the data transmission path used to transmit the second BFD control message.

For example, the data transmission path between the layer-2 devices M2 and M1 is the PW1. For the BFD control message (namely, the second BFD control message) whose destination IP address is the IP address of the CE device 1, whose source IP address is the IP address of the layer-3 device R1, and whose session state is down, after receiving the second BFD control message through the PW1, the layer-2 device M1 may associate the IP address "CE_IP1" of the CE device 1 and the IP address "R1_IP" of the layer-3 device R1 with the PW1 by using a mapping relationship table described in Table 2, to associate the first BFD session with the data transmission path used to transmit the second BFD control message.

**Table 2**

| Serial number | IP address of a CE device | IP address of a layer-3 device | Data transmission path |
|---|---|---|---|
| 1 | CE_IP1 | R1_IP | PW1 |
| 2 | ... | ... | ... |

The fields such as the serial number, the IP address of the CE device, the IP address of the layer-3 device, and the data transmission path in Table 2, and the field values under the fields are merely used to assist in describing the technical solution provided in this embodiment of this application. In an actual application, the fields and the field values may be replaced with real values.

After establishing the first BFD session, the layer-3 device R1 may periodically transmit a first BFD control message to the layer-2 device M1. A source IP address of the first BFD control message is the IP address of the layer-3 device R1, and a destination IP address of the first BFD control message is the IP address of the CE device 1. The first BFD control message is used to indicate that a first BFD session is in a connection establishment state, that is, a session state included in the first BFD control message is the session state "up" recorded by the state machine that is of the first BFD session and that is started by the layer-3 device R1. In this way, the layer-2 device M1 performs a step 306a to detect a failure of a data transmission path between the layer-2 device M1 and the layer-3 device R1.

In the step 306a, the layer-2 device M1 may continuously listen to a first data packet whose destination IP address is the IP address of the CE device 1 and whose source IP address is the IP address of the layer-3 device R1. For the first data packet received by the layer-2 device M1, it may be further determined whether the first data packet is the first BFD control message used to indicate that the first BFD session is in the connection establishment state. If the first data packet is the first BFD control message, the first BFD control message is processed and terminated. If the layer-2 device M1 does not receive the first BFD control message within a preset quantity of consecutive time intervals, the layer-2 device M1 may determine that the data transmission path between the layer-2 device M1 and the layer-3 device R1 may fail, for example, the layer-2 device M2 or the layer-3 device R3 fails. Consequently, the traffic flow that belongs to the target traffic may not be transmitted through a first data transmission path that is in the data transmission path group and that is used to transmit the first BFD control message.

Correspondingly, to enable the layer-3 device R1 to detect the failure of the data transmission path between the layer-2 device M1 and the layer-3 device R1, the layer-2 device M1 may periodically transmit a third BFD control message to the layer-3 device R1 after establishing the first BFD session. A source IP address of the third BFD control message is an IP address of the layer-2 device M1, and a destination IP address of the third BFD control message is the IP address of the CE device 1. The third BFD control message is used to indicate that the first session state is the connection establishment state. That is, a session state included in the third BFD control message is the session state "up" recorded by the state machine that is of the first BFD session and that is started by the layer-2 device M1. In this way, the layer-3 device R1 performs a step 306b to detect the failure of the data transmission path between the layer-2 device M1 and the layer-3 device R1.

In the step 306b, the layer-3 device R1 may continuously listen to a second data packet whose destination IP address is the IP address of the layer-3 device R1 and whose source IP address is the IP address of the CE device 1. For the second data packet received by the layer-3 device R1, it may be further determined whether the second data packet is the third BFD control message used to indicate that the first BFD session is in the connection establishment state. If the layer-3 device R1 does not receive the third BFD control message within the preset quantity of consecutive time intervals, it indicates that the data transmission path between the layer-2 device M1 and the layer-3 device R1 fails, for example, the layer-2 device M1 or the layer-2 device M2 fails. Consequently, the layer-3 device R1 may not continue to normally receive and/or transmit, through a data transmission path between the layer-2 device M2 and the layer-3 device R1, the traffic flow that belongs to the target traffic.

Similar to the steps 306a and 306b, the layer-3 device R1 and the layer-3 device R3 may further transmit BFD control messages to each other and receive BFD control messages from each other, and separately perform failure detection on corresponding data transmission paths. A process of implementing failure detection on a data transmission path in steps 306c and 306d is not described herein in detail again.

If the layer-2 device M1 detects, in the step 306a, that the data transmission path between the layer-2 device M1 and the layer-3 device R1 may fail, the layer-2 device M1 may perform a step 307 to determine a data transmission path that is in the data transmission path group associated with the target traffic and that is used to transmit the first BFD control message.

In some embodiments, the layer-2 device M1 may determine the data transmission path used to transmit the second BFD control message as the first data transmission path used to transmit the first BFD control message.

For example, the layer-2 device M1 may query Table 2 based on the session addresses of the first BFD session, namely, the IP address of the CE device 1 and the IP address of the layer-3 device R1, and determine that the data transmission path used to transmit the second BFD control message is the PW1, where the PW1 may be determined as the data transmission path used to transmit the first BFD control message.

Correspondingly, the layer-2 device M1 may further perform a step 308a to perform protection switching based on the data transmission path used to transmit the first BFD control message and the data transmission path group associated with the target traffic. After the layer-2 device M1 performs protection switching, the layer-2 device M1 may receive and/or transmit, through a second data transmission path other than the first data transmission path in the data transmission path group, the traffic flow that belongs to the target traffic.

In some embodiments, when the layer-3 device R1 detects, in the step 306c, that a data transmission path between the layer-3 device R1 and the layer-3 device R3 fails, or when the layer-3 device R1 closes the first BFD session under the control of a user, the layer-3 device R1 may transmit, to the layer-2 device M1, a fourth BFD control message whose source IP address is the IP address of the layer-3 device R1, whose destination IP address is the IP address of the CE device 1, and whose session state is "admin down" or "down", where admin down indicates that the first BFD session is closed under the control of the user.

For the layer-2 device M1, if the layer-2 device M1 receives the fourth BFD control message used to indicate that the first BFD session is in a connection interrupted state, the layer-2 device M1 cannot determine whether the data transmission path between the layer-2 device M1 and the layer-3 device R1 fails in this case. To ensure continuity of the target traffic, the layer-2 device M1 may determine, from the data transmission path group, a third data transmission path used to transmit the fourth BFD control message, and then perform protection switching based on the third data transmission path and the data transmission path group. After performing protection switching, the layer-2 device M1 may receive and/or transmit, through a fourth data transmission path other than the third data transmission path in the data transmission path group, the traffic flow that belongs to the target traffic.

It should be noted that when the layer-3 device R1 detects, in the step 306c, that the data transmission path between the layer-3 device R1 and the layer-3 device R3 may fail, or when the layer-3 device R1 closes the first BFD session under the control of the user, after transmitting the fourth BFD control message to the layer-2 device M1, the layer-3 device R1 may perform protection switching in a step 308b, so that the layer-2 device M1 and the layer-3 device R1 cooperatively perform protection switching.

It should be noted that when the layer-3 device R1 detects, in the step 306b, that the data transmission path between the layer-2 device M1 and the layer-3 device R1 may fail, the layer-3 device R1 may perform protection switching in the step 308b.

It should be noted that when the layer-3 device R3 detects, in the step 306d, that the data transmission path between the layer-3 device R1 and the layer-3 device R3 may fail, the layer-3 device R3 may perform protection switching in a step 308c.

Depending on a connection relationship between the layer-3 devices in the IP routing domain, a failed layer-3 device, and protection switching technologies supported by the layer-3 devices, after the layer-2 device M1 and the layer-3 device R1 or the layer-3 device R3 cooperatively perform protection switching, and after the traffic flow that comes from the CE device and that belongs to the target traffic arrives at the layer-3 device R2 in the IP routing domain, the traffic flow may be transmitted to the layer-3 device R3 through a corresponding data transmission path.

For example, if the layer-3 device R1 fails, the layer-3 device R3 may detect, in the step 306d, that the data transmission path between the layer-3 device R1 and the layer-3 device R3 may fail. After protection switching is performed in the step 308c, the traffic flow that belongs to the target traffic is no longer received/transmitted from/to the MAC switched domain through the R1, but the traffic flow that belongs to the target traffic is received/transmitted from/to the MAC switched domain through the layer-3 device R2. As shown in FIG. 3A and FIG. 3B, after the layer-2 device M1 and the layer-3 device R3 cooperatively perform protection switching, the layer-2 device M1 may transmit, to the layer-2 device M3 through the data transmission path between the layer-2 device M1 and the layer-2 device M3, the traffic flow that comes from the CE device 1 and that belongs to the target traffic, the layer-2 device M3 transmits the traffic flow to the correspondingly connected layer-3 device R2, and then the layer-3 device R2 transmits the traffic flow to the layer-3 device R3.

The same for the layer-3 device R1. As shown in FIG. 3A and FIG. 3B, after the layer-2 device M1 and the layer-3 device R1 cooperatively perform protection switching, the layer-2 device M1 may transmit, to the layer-2 device M3 through the data transmission path between the layer-2 device M1 and the layer-2 device M3, the traffic flow that comes from the CE device 1 and that belongs to the target traffic, and the layer-2 device M3 transmits the traffic flow to the layer-3 device R2 through a data transmission path between the layer-2 device M3 and the R2. Then, the traffic flow may be transmitted to the layer-3 device R1, and the layer-3 device R1 transmits the traffic flow to the layer-3 device R3. Alternatively, the layer-3 device R2 directly transmits the traffic flow to the layer-3 device R3.

For each interface that is in the layer-2 device and that is configured to connect to the CE device, if BFD session synchronization is enabled for the interface, the layer-2 device may listen, based on the IP address of the CE device connected to the interface, to a BFD session established by the CE device connected to the interface and the layer-3 device in the IP routing domain, to perceive a failure of the layer-3 device by listening to the BFD session, and perform protection switching when it is perceived that the layer-3 device may fail. The traffic scenario shown in FIG. 1 is still used as an example. If the layer-2 device M1 determines to enable BFD session synchronization for the interface GE1, a difference between the process in which the layer-2 device M1 and the layer-3 device in the IP routing domain cooperatively perform protection switching and the step 304a shown in FIG. 3A lies in that the layer-3 device R1 and the CE device 1 establish a first BFD session that uses the IP address of the layer-3 device R1 and the IP address of the CE device 1 as session addresses.

In a possible implementation, in the process of establishing the first BFD session, the layer-2 device M1 determines to enable BFD session synchronization for the interface GE1. When receiving a data packet from the IP routing domain, the layer-2 device M1 may detect, based on the IP address of the CE device 1 connected to the interface GE1, whether the data packet is the second BFD control message to be transmitted to the CE device 1. If the data packet is the second BFD control message to be transmitted to the CE device 1, the state machine of the first BFD session is started, and the session state of the state machine is switched from down to init. In addition, the layer-2 device M1 further needs to forward the second BFD control message to the CE device 1, so that the CE device 1 and the layer-3 device R1 perform a process similar to that in FIG. 4 to complete establishment of the first BFD session.

Correspondingly, different from the step 306a shown in FIG. 3B, the layer-2 device M1 performs failure detection on the data transmission path between the layer-2 device M1 and the layer-3 device R1 by listening to the first BFD session established by the layer-3 device R1 and the CE device 1.

In a possible implementation, the layer-2 device M1 may continuously listen to a first data packet whose destination IP address is the IP address of the CE device 1 and whose source IP address is the IP address of the layer-3 device R1. For the first data packet received by the layer-2 device M1, it is determined whether the first data packet is the first BFD control message used to indicate that the first BFD session is in the connection establishment state. If the first data packet is the first BFD control message, the state machine of the first BFD session is updated, and the first BFD control message is forwarded to the CE device 1. If the layer-2 device M1 does not receive the first BFD control message within the preset quantity of consecutive time intervals, the layer-2 device M1 may determine that the data transmission path between the layer-2 device M1 and the layer-3 device R1 may fail, for example, the layer-2 device M2 or the layer-3 device R3 fails. Consequently, the traffic flow that belongs to the target traffic may not be transmitted through the first data transmission path that is in the data transmission path group and that is used to transmit the first BFD control message.

It should be noted that the third BFD control message from the CE device 1 is transmitted to the layer-3 device R1 by using the layer-2 device M1. Correspondingly, different from the step 306b shown in FIG. 3B, the layer-3 device R1 performs failure detection on a data transmission path between the CE device 1 and the layer-3 device R1.

In a possible implementation, if the layer-3 device R1 does not receive the third BFD control message within the preset quantity of consecutive time intervals, it indicates that the data transmission path between the CE device 1 and the layer-3 device R1 fails, for example, the CE device 1, the layer-2 device M1, or the layer-2 device M2 fails. Consequently, the layer-3 device R1 may not continue to normally receive and/or transmit, through the data transmission path between the layer-2 device M2 and the layer-3 device R1, the traffic flow that belongs to the target traffic.

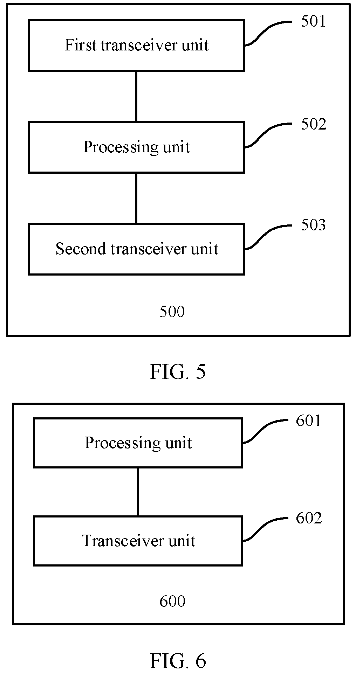

Based on a same concept as the foregoing method embodiment, as shown in FIG. 5, an embodiment of this application further provides a communication apparatus 500. The communication apparatus 500 includes: a first transceiver unit 501, configured to perform the step 201 in FIG. 2; a processing unit 502, configured to perform the steps 203 and 205 in FIG. 2; and a second transceiver unit 503, configured to perform the step 207 in FIG. 2. For related descriptions, refer to the descriptions of the related steps in FIG. 2. Details are not described herein again.

In a possible implementation, the second transceiver unit 503 is further configured to receive a second BFD control message from the target network device, where a destination IP address of the second BFD control message is the IP address of the CE device, and a source IP address of the second BFD control message is the IP address of the target network device. The processing unit 502 is further configured to respond to the second BFD control message to establish the first BFD session. The second transceiver unit 503 is further configured to transmit a third BFD control message to the target network device, where the third BFD control message is used to indicate that the first BFD session is in the connection establishment state.

In a possible implementation, the second transceiver unit 503 is further configured to receive a first data packet, where a destination IP address of the first data packet is the IP address of the CE device, and a source IP address of the first data packet is the IP address of the target network device. The processing unit 502 is further configured to: determine whether the first data packet is the first BFD control message; and if the first data packet is the first BFD control message, terminate the first BFD control message.

In a possible implementation, the processing unit 502 is further configured to determine a data transmission path used to transmit the second BFD control message, and associate the first BFD session with the data transmission path used to transmit the second BFD control message. The processing unit 502 is specifically configured to determine the data transmission path associated with the first BFD session as the first data transmission path used to transmit the first BFD control message.

In a possible implementation, the processing unit 502 is specifically configured to associate the IP address of the CE device and the IP address of the target network device with the data transmission path used to transmit the second BFD control message.

In a possible implementation, the second transceiver unit 503 is further configured to receive a first data packet, where a destination IP address of the first data packet is the IP address of the CE device, and a source IP address of the first data packet is the IP address of the target network device. The processing unit 502 is further configured to determine whether the first data packet is the first BFD control message. The first transceiver unit is further configured to transmit the first data packet to the CE device.

In a possible implementation, the processing unit 502 is further configured to: when a fourth BFD control message is received from the target network device, determine a third data transmission path used to transmit the fourth BFD control message. The fourth BFD control message is used to indicate that the first BFD session is in a connection interrupted state. The second transceiver unit 503 is further configured to receive and/or transmit, through a fourth data transmission path other than the third data transmission path in the data transmission path group, the traffic flow that belongs to the target traffic.

In a possible implementation, the data transmission path group may include but is not limited to a PWG, a VLAN transmission path group, or an SVLAN transmission path group.

In a possible implementation, the first network device includes a first interface, and the CE device is connected to the first interface. The target traffic is determined based on the VLAN identifier and an identifier of the first interface.

Based on a same concept as the foregoing method embodiment, as shown in FIG. 6, an embodiment of this application further provides a communication apparatus 600. The communication apparatus 600 includes a processing unit 601, configured to establish a first BFD session, where session addresses of the first BFD session include an IP address of a CE device and an IP address of a target network device; and a transceiver unit 602, configured to transmit a first BFD control message to a first network device, where the first BFD control message is used to indicate that the first BFD session is in a connection establishment state, and the first BFD control message is transmitted to the first network device through a data transmission path between a second network device connected to the target network device and the first network device.

In a possible implementation, the processing unit 601 is further configured to: when the target network device does not receive a third BFD control message within a preset quantity of consecutive time intervals, perform protection switching, where a source IP address of the third BFD control message is the IP address of the CE device, and a destination IP address of the third BFD control message is the IP address of the target network device.

In a possible implementation, an IP routing domain further includes a fourth network device, two third network devices are separately connected to the fourth network device, and the target network device establishes a second BFD session with the fourth network device. The transceiver unit 602 is further configured to: when the second BFD session is in a connection interrupted state, transmit a fourth BFD control message to the first network device, and trigger the processing unit 601 to perform protection switching, where the fourth BFD control message is used to indicate that the first BFD session is in the connection interrupted state, and the fourth BFD control message is transmitted to the first network device through the data transmission path between the second network device connected to the target network device and the first network device.

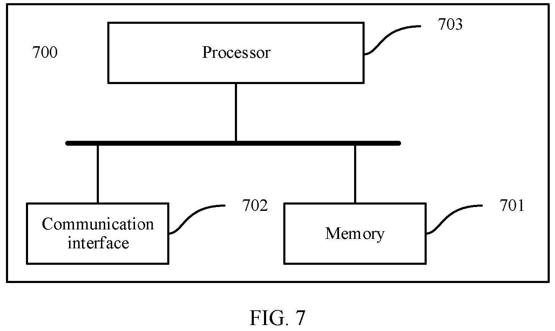

Based on a same concept as the foregoing method embodiment, as shown in FIG. 7, an embodiment of this application further provides a network device 700. It should be understood that the network device 700 may perform the steps performed by the first network device/the layer-2 device M1 in the method shown in any one of FIG. 2 to FIG. 4, or perform the steps performed by the target network device/the layer-3 device R1 in the method shown in any one of FIG. 3A and FIG. 3B to FIG. 5. To avoid repetition, details are not described herein again. The network device 700 includes: a memory 701, configured to store a program; a communication interface 702, configured to communicate with another device; and a processor 703, configured to execute the program in the memory 701. When the program is executed, the processor 703 is configured to at least: receive an ARP message from a CE device through the communication interface 702, where the ARP message includes a virtual local area network VLAN identifier and an IP address of the CE device; determine a data transmission path group associated with target traffic, where the target traffic is determined based on the VLAN identifier, and the data transmission path group includes data transmission paths between two second network devices and a first network device; when the first network device does not receive a first BFD control message from a target network device within a preset quantity of consecutive time intervals, determine a first data transmission path that is in the data transmission path group and that is used to transmit the first BFD control message, where the target network device is one of two third network devices, the first BFD control message is used to indicate that a first BFD session is in a connection establishment state, and session addresses of the first BFD session include the IP address of the CE device and an IP address of the target network device; and receive and/or transmit, through a second data transmission path other than the first data transmission path in the data transmission path group, a traffic flow that belongs to the target traffic. Alternatively, the processor 703 is further configured to: establish a first BFD session, where session addresses of the first BFD session include an IP address of a CE device and an IP address of a target network device; and transmit a first BFD control message to a first network device through the communication interface 702, where the first BFD control message is used to indicate that the first BFD session is in a connection establishment state, and the first BFD control message is transmitted to the first network device through a data transmission path between a second network device connected to the target network device and the first network device. It may be understood that the network device 700 shown in FIG. 7 may use a chip or a circuit, for example, a chip or a circuit that may be disposed in the network device 700. The communication interface 702 may be alternatively a transceiver. The transceiver includes a receiver and a transmitter. Further, the network device 700 may further include a bus system.

The processor 703, the memory 701, the receiver, and the transmitter are connected to each other by using the bus system. The processor 703 is configured to execute instructions stored in the memory 701, to control the receiver to receive a signal, and control the transmitter to transmit a signal, thereby completing the steps performed by the first network device in the protection switching method provided in any embodiment of this application. The receiver and the transmitter may be the same or different physical entities. When the receiver and the transmitter are the same physical entities, the receiver and the transmitter may be collectively referred to as transceivers. The memory 701 may be integrated into the processor 703, or may be disposed separately from the processor 703.

In an implementation, functions of the receiver and the transmitter may be considered to be implemented by using a transceiver circuit or a transceiver-specific chip. The processor 703 may be considered to be implemented by using a dedicated processing chip, a processing circuit, a processor, or a general purpose chip. Correspondingly, an embodiment of this application further provides a chip system. The chip system includes a processor, configured to implement a function of the communication apparatus 500/communication apparatus 600 in any one of the foregoing embodiments. In a possible design, the chip system further includes a memory, and the memory is configured to store program instructions and/or data. The chip system may include a chip, or may include a chip and another discrete component.

Persons of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of embodiments of this application.

Different embodiments provided in this application may be combined with each other. In embodiments provided in this application, it should be understood that the disclosed system, apparatus, and method may be implemented in other manners. For example, the described apparatus embodiments are merely examples. For example, division into the units is merely logical functional division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the technical solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory, a random access memory, a magnetic disk, or an optical disc. Correspondingly, a computer program product is provided. The computer program product includes computer program code, and when the computer program code is run on a computer, the computer is enabled to perform the method according to any one of the first aspect or the second aspect.

The foregoing descriptions are merely specific implementations of embodiments of this application, the invention is defined by the appended claims. Any variation or replacement readily figured out by persons skilled in the art within the technical scope disclosed in embodiments of this application shall fall within the protection scope of embodiments of this application, as long as they do not depart from the scope of the invention as it is depicted by the appended claims. In embodiments of this application, unless otherwise specified and there is a logical conflict, terms and/or descriptions in different embodiments are consistent and may be referred to each other. Technical features in different embodiments may be combined to form a new embodiment according to an inherent logical relationship thereof, as long as they do not depart from the scope of the invention as it is depicted by the appended claims.

In this application, the term "and/or describes an association relationship between associated objects, and represents that three relationships may exist. For example, A and/or B may represent the following cases: Only A exists, both A and B exist, and only B exists, where A and B may be singular or plural. In the text description of this application, the character "/" usually indicates that associated objects are in an "or" relationship. In the formula of this application, the character "/" indicates that associated objects are in a "division" relationship.

It may be understood that, for ease of description, various numerical symbols used in embodiments of this application are used for distinguishing, and are not used to limit the scope of embodiments of this application. Sizes of the serial numbers of the foregoing processes do not mean a performing sequence, and the performing sequence of the processes should be determined according to functions and internal logic thereof.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, as long as they do not depart from the scope of the invention as it is depicted by the appended claims.

## Claims

1. A protection switching method, applied to a first network device in a media access control, MAC, switched domain, wherein the first network device is connected to a customer edge, CE, device, the MAC switched domain further comprises two second network devices, the two second network devices are connected to two third network devices in an Internet protocol, IP, routing domain in a one-to-one correspondence, and the method comprises:
receiving (201) an address resolution protocol, ARP, message from the CE device, wherein the ARP message comprises a virtual local area network, VLAN, identifier and an IP address of the CE device;
determining (203) a data transmission path group associated with target traffic, wherein the target traffic is determined based on the VLAN identifier, and the data transmission path group comprises data transmission paths between the two second network devices and the first network device;
when the first network device does not receive a first bidirectional forwarding detection, BFD, control message from a target network device within a preset quantity of consecutive time intervals, determining (205) a first data transmission path that is in the data transmission path group and that is used to transmit the first BFD control message, wherein the target network device is one of the two third network devices, the first BFD control message is used to indicate that a first BFD session is in a connection establishment state, and session addresses of the first BFD session comprise the IP address of the CE device and an IP address of the target network device; and
receiving and/or transmitting (207), through a second data transmission path other than the first data transmission path in the data transmission path group, a traffic flow that belongs to the target traffic;
wherein
before when the first network device does not receive a first BFD control message from a target network device within a preset quantity of consecutive time intervals, determining a first data transmission path that is in the data transmission path group and that is used to transmit the first BFD control message, the method further comprises:
receiving a second BFD control message from the target network device, wherein a destination IP address of the second BFD control message is the IP address of the CE device, and a source IP address of the second BFD control message is the IP address of the target network device; and
responding to the second BFD control message to establish the first BFD session; and transmitting a third BFD control message to the target network device, wherein the third BFD control message is used to indicate that the first BFD session is in the connection establishment state.

2. The method according to claim 1, wherein
before when the first network device does not receive a first BFD control message from a target network device within a preset quantity of consecutive time intervals, determining a first data transmission path that is in the data transmission path group and that is used to transmit the first BFD control message, the method further comprises:
receiving a first data packet, wherein a destination IP address of the first data packet is the IP address of the CE device, and a source IP address of the first data packet is the IP address of the target network device;
determining whether the first data packet is the first BFD control packet; and
if the first data packet is the first BFD control packet, terminating the first BFD control packet.

3. The method according to claim 1, wherein
before when the first network device does not receive a first BFD control message from a target network device within a preset quantity of consecutive time intervals, determining a first data transmission path that is in the data transmission path group and that is used to transmit the first BFD control message, the method further comprises:
determining a data transmission path used to transmit the second BFD control packet, and associating the first BFD session with the data transmission path used to transmit the second BFD control packet; and
the determining a first data transmission path that is in the data transmission path group and that is used to transmit the first BFD control message comprises: determining the data transmission path associated with the first BFD session as the first data transmission path used to transmit the first BFD control message.

4. The method according to claim 3, wherein
the associating the first BFD session with the data transmission path used to transmit the second BFD control packet comprises:
associating the IP address of the CE device and the IP address of the target network device with the data transmission path used to transmit the second BFD control message.

5. The method according to claim 1, wherein
before when the first network device does not receive a first BFD control message from a target network device within a preset quantity of consecutive time intervals, determining a first data transmission path that is in the data transmission path group and that is used to transmit the first BFD control message, the method further comprises:
receiving a first data packet, wherein a destination IP address of the first data packet is the IP address of the CE device, and a source IP address of the first data packet is the IP address of the target network device;
transmitting the first data packet to the CE device; and
determining whether the first data packet is the first BFD control packet.

6. The method according to any one of claims 1 to 5, wherein the method further comprises:
when receiving a fourth BFD control message from the target network device, determining a third data transmission path that is in the data transmission path group and that is used to transmit the fourth BFD control packet, wherein the fourth BFD control packet is used to indicate that the first BFD session is in a connection interrupted state; and
receiving and/or transmitting, through a fourth data transmission path other than the third data transmission path in the data transmission path group, the traffic flow that belongs to the target traffic.

7. The method according to any one of claims 1 to 6, wherein the data transmission path group comprises a pseudo wire group PWG, a VLAN transmission path group, or a service provider virtual local area network SVLAN transmission path group.

8. The method according to any one of claims 1 to 4, wherein
the first network device comprises a first interface, and the CE device is connected to the first interface; and
the target traffic is determined based on the VLAN identifier and an identifier of the first interface.

9. A communication apparatus (500), in a first network device in a media access control MAC switched domain, wherein the first network device is connected to a customer edge CE device, the MAC switched domain further comprises two second network devices, the two second network devices are connected to two third network devices in an Internet protocol IP routing domain in a one-to-one correspondence, and the communication apparatus comprises:
a first transceiver unit (501), configured to receive an address resolution protocol ARP message from the CE device, wherein the ARP message comprises a virtual local area network VLAN identifier and an IP address of the CE device;
a processing unit (502), configured to: determine a data transmission path group associated with target traffic, wherein the target traffic is determined based on the VLAN identifier, and the data transmission path group comprises data transmission paths between the two second network devices and the first network device; and when the first network device does not receive a first bidirectional forwarding detection BFD control message from a target network device within a preset quantity of consecutive time intervals, determine a first data transmission path that is in the data transmission path group and that is used to transmit the first BFD control message, wherein the target network device is one of the two third network devices, the first BFD control message is used to indicate that a first BFD session is in a connection establishment state, and session addresses of the first BFD session comprise the IP address of the CE device and an IP address of the target network device; and
a second transceiver unit (503), configured to receive and/or transmit, through a second data transmission path other than the first data transmission path in the data transmission path group, a traffic flow that belongs to the target traffic,
wherein
the second transceiver unit is further configured to receive a second BFD control message from the target network device, wherein a destination IP address of the second BFD control message is the IP address of the CE device, and a source IP address of the second BFD control message is the IP address of the target network device; and
the processing unit is further configured to respond to the second BFD control message to establish the first BFD session; and the second transceiver unit is further configured to transmit a third BFD control message to the target network device, wherein the third BFD control message is used to indicate that the first BFD session is in the connection establishment state.

10. The communication apparatus according to claim 9, wherein
the second transceiver unit is further configured to receive a first data packet, wherein a destination IP address of the first data packet is the IP address of the CE device, and a source IP address of the first data packet is the IP address of the target network device; and
the processing unit is further configured to: determine whether the first data packet is the first BFD control message; and if the first data packet is the first BFD control packet, terminate the first BFD control packet.

## Patentansprüche

1. Schutzschaltungsverfahren, angewendet auf eine erste Netzwerkvorrichtung in einer Medienzugriffssteuerungs-, MAC, geschalteten Domäne, wobei die erste Netzwerkvorrichtung mit einer Kundenrand-, CE, Vorrichtung verbunden ist, die MAC geschaltete Domäne ferner zwei zweite Netzwerkvorrichtungen umfasst, die zwei zweiten Netzwerkvorrichtungen mit zwei dritten Netzwerkvorrichtungen in einer Internetprotokoll-, IP, Routenführungsdomäne in einer Eins-zu-eins-Entsprechung verbunden sind, und das Verfahren umfasst:
Empfangen (201) einer Adressauflösungsprotokoll-, ARP, Nachricht aus der CE-Vorrichtung, wobei die ARP-Nachricht einen virtuellen lokalen Netzwerk-, VLAN, Identifikator und eine IP-Adresse der CE-Vorrichtung umfasst;
Bestimmen (203) einer Datenübertragungsweggruppe, die dem Zielverkehr zugeordnet ist, wobei der Zielverkehr basierend auf dem VLAN-Identifikator bestimmt wird, und die Datenübertragungsweggruppe Datenübertragungswege zwischen den zwei zweiten Netzwerkvorrichtungen und der ersten Netzwerkvorrichtung umfasst;
wenn die erste Netzwerkvorrichtung keine erste bidirektionale Weiterleitungserkennungs-, BFD, Steuernachricht aus einer Zielnetzwerkvorrichtung innerhalb einer voreingestellten Anzahl von aufeinanderfolgenden Zeitintervallen empfängt, Bestimmen (205) eines ersten Datenübertragungsweges, der sich in der Datenübertragungsweggruppe befindet und der zum Übertragen der ersten BFD-Steuernachricht verwendet wird, wobei die Zielnetzwerkvorrichtung eine der zwei dritten Netzwerkvorrichtungen ist, die erste BFD-Steuernachricht zur Angabe verwendet wird, dass sich eine erste BFD-Sitzung in einem Verbindungsaufbauzustand befindet, und Sitzungsadressen der ersten BFD-Sitzung die IP-Adresse der CE-Vorrichtung und eine IP-Adresse der Zielnetzwerkvorrichtung umfassen; und
Empfangen und/oder Übertragen (207), über einen zweiten Datenübertragungsweg, der nicht der erste Datenübertragungsweg in der Datenübertragungsweggruppe ist, eines Verkehrsflusses, der zum Zielverkehr gehört;
wobei
bevor, wenn die erste Netzwerkvorrichtung keine erste BFD-Steuernachricht aus einer Zielnetzwerkvorrichtung innerhalb einer voreingestellten Anzahl von aufeinanderfolgenden Zeitintervallen empfängt, ein erster Datenübertragungsweg bestimmt wird, der sich in der Datenübertragungsweggruppe befindet und der zum Übertragen der ersten BFD-Steuernachricht verwendet wird, das Verfahren ferner umfasst:
Empfangen einer zweiten BFD-Steuernachricht aus der Zielnetzwerkvorrichtung, wobei eine Ziel-IP-Adresse der zweiten BFD-Steuernachricht die IP-Adresse der CE-Vorrichtung ist und eine Quellen-IP-Adresse der zweiten BFD-Steuernachricht die IP-Adresse der Zielnetzwerkvorrichtung ist; und
Antworten auf die zweite BFD-Steuernachricht, um die erste BFD-Sitzung aufzubauen; und Übertragen einer dritten BFD-Steuernachricht an die Zielnetzwerkvorrichtung, wobei die dritte BFD-Steuernachricht zur Angabe verwendet wird, dass sich die erste BFD-Sitzung im Verbindungsaufbauzustand befindet.

2. Verfahren nach Anspruch 1, wobei
bevor, wenn die erste Netzwerkvorrichtung keine erste BFD-Steuernachricht aus einer Zielnetzwerkvorrichtung innerhalb einer voreingestellten Anzahl von aufeinanderfolgenden Zeitintervallen empfängt, ein erster Datenübertragungsweg bestimmt wird, der sich in der Datenübertragungsweggruppe befindet und der zum Übertragen der ersten BFD-Steuernachricht verwendet wird, das Verfahren ferner umfasst:
Empfangen eines ersten Datenpakets, wobei eine Ziel-IP-Adresse des ersten Datenpakets die IP-Adresse der CE-Vorrichtung ist und eine Quellen-IP-Adresse des ersten Datenpakets die IP-Adresse der Zielnetzwerkvorrichtung ist;
Bestimmen, ob das erste Datenpaket das erste BFD-Steuerpaket ist; und
wenn das erste Datenpaket das erste BFD-Steuerpaket ist, Beenden des ersten BFD-Steuerpakets.

3. Verfahren nach Anspruch 1, wobei
bevor, wenn die erste Netzwerkvorrichtung keine erste BFD-Steuernachricht aus einer Zielnetzwerkvorrichtung innerhalb einer voreingestellten Anzahl von aufeinanderfolgenden Zeitintervallen empfängt, ein erster Datenübertragungsweg bestimmt wird, der sich in der Datenübertragungsweggruppe befindet und der zum Übertragen der ersten BFD-Steuernachricht verwendet wird, das Verfahren ferner umfasst:
Bestimmen eines Datenübertragungsweges, der zum Übertragen des zweiten BFD-Steuerpakets verwendet wird, und Zuordnen der ersten BFD-Sitzung zu dem Datenübertragungsweg, der zum Übertragen des zweiten BFD-Steuerpakets verwendet wird; und
das Bestimmen eines ersten Datenübertragungsweges, der sich in der Datenübertragungsweggruppe befindet und der zum Übertragen der ersten BFD-Steuernachricht verwendet wird, umfasst:
Bestimmen des Datenübertragungsweges, der der ersten BFD-Sitzung zugeordnet ist, als ersten Datenübertragungsweg, der zum Übertragen der ersten BFD-Steuernachricht verwendet wird.

4. Verfahren nach Anspruch 3, wobei
das Zuordnen der ersten BFD-Sitzung zu dem Datenübertragungsweg, der zum Übertragen des zweiten BFD-Steuerpakets verwendet wird, umfasst:
Zuordnen der IP-Adresse der CE-Vorrichtung und der IP-Adresse der Zielnetzwerkvorrichtung zu dem Datenübertragungsweg, der zum Übertragen der zweiten BFD-Steuernachricht verwendet wird.

5. Verfahren nach Anspruch 1, wobei
bevor, wenn die erste Netzwerkvorrichtung keine erste BFD-Steuernachricht aus einer Zielnetzwerkvorrichtung innerhalb einer voreingestellten Anzahl von aufeinanderfolgenden Zeitintervallen empfängt, ein erster Datenübertragungsweg bestimmt wird, der sich in der Datenübertragungsweggruppe befindet und der zum Übertragen der ersten BFD-Steuernachricht verwendet wird, das Verfahren ferner umfasst:
Empfangen eines ersten Datenpakets, wobei eine Ziel-IP-Adresse des ersten Datenpakets die IP-Adresse der CE-Vorrichtung ist und eine Quellen-IP-Adresse des ersten Datenpakets die IP-Adresse der Zielnetzwerkvorrichtung ist;
Übertragen des ersten Datenpakets an die CE-Vorrichtung; und
Bestimmen, ob das erste Datenpaket das erste BFD-Steuerpaket ist.

6. Verfahren nach einem der Ansprüche 1 bis 5, wobei das Verfahren ferner umfasst:
wenn eine vierte BFD-Steuernachricht aus der Zielnetzwerkvorrichtung empfangen wird, Bestimmen eines dritten Datenübertragungsweges, der sich in der Datenübertragungsweggruppe befindet und der zum Übertragen des vierten BFD-Steuerpakets verwendet wird, wobei das vierte BFD-Steuerpaket zur Angabe verwendet wird, dass sich die erste BFD-Sitzung in einem Verbindungsunterbrechungszustand befindet; und
Empfangen und/oder Übertragen, über einen vierten Datenübertragungsweg, der nicht der dritte Datenübertragungsweg in der Datenübertragungsweggruppe ist, des Verkehrsflusses, der zum Zielverkehr gehört.

7. Verfahren nach einem der Ansprüche 1 bis 6, wobei die Datenübertragungsweggruppe eine Pseudo-Draht-Gruppe, PWG, eine VLAN-Übertragungsweggruppe oder eine virtuelle lokale Dienstanbieter-Netzwerk-, SVLAN, Übertragungsweggruppe umfasst.

8. Verfahren nach einem der Ansprüche 1 bis 4, wobei
die erste Netzwerkvorrichtung eine erste Schnittstelle umfasst und die CE-Vorrichtung mit der ersten Schnittstelle verbunden ist;
und der Zielverkehr basierend auf dem VLAN-Identifikator und einem Identifikator der ersten Schnittstelle bestimmt wird.

9. Kommunikationsvorrichtung (500) in einer ersten Netzwerkvorrichtung in einer Medienzugriffssteuerung-, MAC, geschalteten Domäne, wobei die erste Netzwerkvorrichtung mit einer Kundenrand-, CE, Vorrichtung verbunden ist, die MAC geschaltete Domäne ferner zwei zweite Netzwerkvorrichtungen umfasst, die zwei zweiten Netzwerkvorrichtungen mit zwei dritten Netzwerkvorrichtungen in einer Internetprotokoll-, IP, Routenführungsdomäne in einer Eins-zu-eins-Entsprechung verbunden sind, und die Kommunikationsvorrichtung umfasst:
eine erste Sende-/Empfangseinheit (501), die zum Empfangen einer Adressauflösungsprotokoll-, ARP, Nachricht aus der CE-Vorrichtung, konfiguriert ist, wobei die ARP-Nachricht einen virtuellen lokalen Netzwerk-, VLAN, Identifikator und eine IP-Adresse der CE-Vorrichtung umfasst;
eine Verarbeitungseinheit (502), die dazu konfiguriert ist: eine Datenübertragungsweggruppe zu bestimmen, die dem Zielverkehr zugeordnet ist, wobei der Zielverkehr basierend auf dem VLAN-Identifikator bestimmt wird, und die Datenübertragungsweggruppe Datenübertragungswege zwischen den zwei zweiten Netzwerkvorrichtungen und der ersten Netzwerkvorrichtung umfasst; und wenn die erste Netzwerkvorrichtung keine erste bidirektionale Weiterleitungserkennungs-, BFD, Steuernachricht aus einer Zielnetzwerkvorrichtung innerhalb einer voreingestellten Anzahl von aufeinanderfolgenden Zeitintervallen empfängt, einen ersten Datenübertragungsweg zu bestimmen, der sich in der Datenübertragungsweggruppe befindet und der zum Übertragen der ersten BFD-Steuernachricht verwendet wird, wobei die Zielnetzwerkvorrichtung eine der zwei dritten Netzwerkvorrichtungen ist, die erste BFD-Steuernachricht zur Angabe verwendet wird, dass sich eine erste BFD-Sitzung in einem Verbindungsaufbauzustand befindet, und Sitzungsadressen der ersten BFD-Sitzung die IP-Adresse der CE-Vorrichtung und eine IP-Adresse der Zielnetzwerkvorrichtung umfassen; und
eine zweite Sende-/Empfangseinheit (503), die dazu ausgelegt ist, über einen zweiten Datenübertragungsweg, der nicht der erste Datenübertragungsweg in der Datenübertragungsweggruppe ist, einen Verkehrsfluss zu empfangen und/oder zu übertragen, der zum Zielverkehr gehört,
wobei
die zweite Sende-/Empfangseinheit ferner dazu konfiguriert ist, eine zweite BFD-Steuernachricht aus der Zielnetzwerkvorrichtung zu empfangen, wobei eine Ziel-IP-Adresse der zweiten BFD-Steuernachricht die IP-Adresse der CE-Vorrichtung ist und eine Quellen-IP-Adresse der zweiten BFD-Steuernachricht die IP-Adresse der Zielnetzwerkvorrichtung ist; und
wobei die Verarbeitungseinheit ferner dazu konfiguriert ist, auf die zweite BFD-Steuernachricht zu antworten, um die erste BFD-Sitzung aufzubauen; und die zweite Sende-/Empfangseinheit ferner dazu konfiguriert ist, eine dritte BFD-Steuernachricht an die Zielnetzwerkvorrichtung zu übertragen, wobei die dritte BFD-Steuernachricht zur Angabe verwendet wird, dass sich die erste BFD-Sitzung im Verbindungsaufbauzustand befindet.

10. Kommunikationsvorrichtung nach Anspruch 9, wobei
die zweite Sende-/Empfangseinheit ferner dazu konfiguriert ist, ein erstes Datenpaket zu empfangen, wobei eine Ziel-IP-Adresse des ersten Datenpakets die IP-Adresse der CE-Vorrichtung ist und eine Quellen-IP-Adresse des ersten Datenpakets die IP-Adresse der Zielnetzwerkvorrichtung ist; und
die Verarbeitungseinheit ferner dazu konfiguriert ist, zu bestimmen, ob das erste Datenpaket die erste BFD-Steuernachricht ist; und wenn das erste Datenpaket das erste BFD-Steuerpaket ist, das erste BFD-Steuerpaket zu beenden.

## Revendications

1. Procédé de commutation de protection, appliqué à un premier dispositif de réseau dans un domaine commuté de commande d'accès au support, MAC, le premier dispositif de réseau étant connecté à un dispositif de côté client, CE, le domaine commuté MAC comprenant également deux deuxièmes dispositifs de réseau, les deux deuxièmes dispositifs de réseau étant connectés à deux troisièmes dispositifs de réseau dans un domaine de routage de protocole Internet, IP, selon une correspondance biunivoque, et le procédé comprenant les étapes consistant à :
recevoir (201) un message de protocole de résolution d'adresse, ARP, en provenance du dispositif CE, le message ARP comprenant un identifiant de réseau local virtuel, VLAN, et une adresse IP du dispositif CE ;
déterminer (203) un groupe de chemins de transmission de données associé à un trafic cible, le trafic cible étant déterminé sur la base de l'identifiant VLAN, et le groupe de chemins de transmission de données comprenant des chemins de transmission de données entre les deux deuxièmes dispositifs de réseau et le premier dispositif de réseau ;
lorsque le premier dispositif de réseau ne reçoit pas un premier message de commande de détection d'expédition bidirectionnelle, BFD, en provenance d'un dispositif de réseau cible à l'intérieur d'une quantité prédéfinie d'intervalles de temps consécutifs, déterminer (205) un premier chemin de transmission de données qui se trouve dans le groupe de chemins de transmission de données et qui est utilisé pour transmettre le premier message de commande BFD, le dispositif de réseau cible étant l'un des deux troisièmes dispositifs de réseau, le premier message de commande BFD étant utilisé pour indiquer qu'une première session BFD est dans un état d'établissement de connexion, et les adresses de session de la première session BFD comprenant l'adresse IP du dispositif CE et une adresse IP du dispositif de réseau cible ; et
recevoir et/ou transmettre (207), sur un deuxième chemin de transmission de données distinct du premier chemin de transmission de données dans le groupe de chemins de transmission de données, un flux de trafic qui appartient au trafic cible ;
dans lequel,
avant le moment où le premier dispositif de réseau ne reçoit pas un premier message de commande BFD en provenance d'un dispositif de réseau cible à l'intérieur d'une quantité prédéfinie d'intervalles de temps consécutifs, et où un premier chemin de transmission de données qui se trouve dans le groupe de chemins de transmission de données et qui est utilisé pour transmettre le premier message de commande BFD est déterminé, le procédé comprend également les étapes consistant à :
recevoir un deuxième message de commande BFD en provenance du dispositif de réseau cible, une adresse IP de destination du deuxième message de commande BFD étant l'adresse IP du dispositif CE, et une adresse IP source du deuxième message de commande BFD étant l'adresse IP du dispositif de réseau cible ; et
répondre au deuxième message de commande BFD pour établir la première session BFD ; et transmettre un troisième message de commande BFD au dispositif de réseau cible, le troisième message de commande BFD étant utilisé pour indiquer que la première session BFD est dans l'état établissement de connexion.

2. Procédé selon la revendication 1, dans lequel
avant le moment où le premier dispositif de réseau ne reçoit pas un premier message de commande BFD en provenance d'un dispositif de réseau cible à l'intérieur d'une quantité prédéfinie d'intervalles de temps consécutifs, et où un premier chemin de transmission de données qui se trouve dans le groupe de chemins de transmission de données et qui est utilisé pour transmettre le premier message de commande BFD est déterminé, le procédé comprend également les étapes consistant à :
recevoir un premier paquet de données, une adresse IP de destination du premier paquet de données étant l'adresse IP du dispositif CE, et une adresse IP source du premier paquet de données étant l'adresse IP du dispositif de réseau cible ;
déterminer si le premier paquet de données est le premier paquet de commande BFD ; et
si le premier paquet de données est le premier paquet de commande BFD, mettre fin au premier paquet de commande BFD.

3. Procédé selon la revendication 1, dans lequel
avant le moment où le premier dispositif de réseau ne reçoit pas un premier message de commande BFD en provenance d'un dispositif de réseau cible à l'intérieur d'une quantité prédéfinie d'intervalles de temps consécutifs, et où un premier chemin de transmission de données qui se trouve dans le groupe de chemins de transmission de données et qui est utilisé pour transmettre le premier message de commande BFD est déterminé, le procédé comprend également les étapes consistant à :
déterminer un chemin de transmission de données utilisé pour transmettre le deuxième paquet de commande BFD, et associer la première session BFD au chemin de transmission de données utilisé pour transmettre le deuxième paquet de commande BFD ; et
la détermination d'un premier chemin de transmission de données qui se trouve dans le groupe de chemins de transmission de données et qui est utilisé pour transmettre le premier message de commande BFD consiste à : déterminer le chemin de transmission de données associé à la première session BFD en tant que premier chemin de transmission de données utilisé pour transmettre le premier message de commande BFD.

4. Procédé selon la revendication 3, dans lequel
l'association de la première session BFD au chemin de transmission de données utilisé pour transmettre le deuxième paquet de commande BFD consiste à :
associer l'adresse IP du dispositif CE et l'adresse IP du dispositif de réseau cible au chemin de transmission de données utilisé pour transmettre le deuxième message de commande BFD.

5. Procédé selon la revendication 1, dans lequel
avant le moment où le premier dispositif de réseau ne reçoit pas un premier message de commande BFD en provenance d'un dispositif de réseau cible à l'intérieur d'une quantité prédéfinie d'intervalles de temps consécutifs, et où un premier chemin de transmission de données qui se trouve dans le groupe de chemins de transmission de données et qui est utilisé pour transmettre le premier message de commande BFD est déterminé, le procédé comprend également les étapes consistant à :
recevoir un premier paquet de données, une adresse IP de destination du premier paquet de données étant l'adresse IP du dispositif CE, et une adresse IP source du premier paquet de données étant l'adresse IP du dispositif de réseau cible ;
transmettre le premier paquet de données au dispositif CE ; et
déterminer si le premier paquet de données est le premier paquet de commande BFD.

6. Procédé selon l'une quelconque des revendications 1 à 5, le procédé comprenant également les étapes consistant à :
lors de la réception d'un quatrième message de commande BFD en provenance du dispositif de réseau cible, déterminer un troisième chemin de transmission de données qui se trouve dans le groupe de chemins de transmission de données et qui est utilisé pour transmettre le quatrième paquet de commande BFD, le quatrième paquet de commande BFD étant utilisé pour indiquer que la première session BFD est dans un état de connexion interrompue ; et
recevoir et/ou transmettre, sur un quatrième chemin de transmission de données distinct du troisième chemin de transmission de données dans le groupe de chemins de transmission de données, le flux de trafic qui appartient au trafic cible.

7. Procédé selon l'une quelconque des revendications 1 à 6, dans lequel le groupe de chemins de transmission de données comprend un groupe de pseudo-câbles PWG, un groupe de chemins de transmission VLAN, ou un groupe de chemins de transmission de réseau local virtuel de fournisseur de services SVLAN.

8. Procédé selon l'une quelconque des revendications 1 à 4, dans lequel
le premier dispositif de réseau comprend une première interface, et le dispositif CE est connecté à la première interface ; et
le trafic cible est déterminé sur la base de l'identifiant VLAN et d'un identifiant de la première interface.

9. Appareil de communication (500), dans un premier dispositif de réseau dans un domaine commuté de commande d'accès au support, MAC, le premier dispositif de réseau étant connecté à un dispositif de côté client CE, le domaine commuté MAC comprenant également deux deuxièmes dispositifs de réseau, les deux deuxièmes dispositifs de réseau étant connectés à deux troisièmes dispositifs de réseau dans un domaine de routage de protocole Internet, IP, selon une correspondance biunivoque, et l'appareil de communication comprenant :
une première unité d'émission/réception (501), configurée pour recevoir un message de protocole de résolution d'adresse, ARP, en provenance du dispositif CE, le message ARP comprenant un identifiant de réseau local virtuel VLAN et une adresse IP du dispositif CE ;
une unité de traitement (502), configurée pour : déterminer un groupe de chemins de transmission de données associé à un trafic cible, le trafic cible étant déterminé sur la base de l'identifiant VLAN, et le groupe de chemins de transmission de données comprenant des chemins de transmission de données entre les deux deuxièmes dispositifs de réseau et le premier dispositif de réseau ; et lorsque le premier dispositif de réseau ne reçoit pas un premier message de commande de détection d'expédition bidirectionnelle BFD en provenance d'un dispositif de réseau cible à l'intérieur d'une quantité prédéfinie d'intervalles de temps consécutifs, déterminer un premier chemin de transmission de données qui se trouve dans le groupe de chemins de transmission de données et qui est utilisé pour transmettre le premier message de commande BFD, le dispositif de réseau cible étant l'un des deux troisièmes dispositifs de réseau, le premier message de commande BFD étant utilisé pour indiquer qu'une première session BFD est dans un état d'établissement de connexion, et les adresses de session de la première session BFD comprenant l'adresse IP du dispositif CE et une adresse IP du dispositif de réseau cible ; et
une deuxième unité d'émission/réception (503), configurée pour recevoir et/ou transmettre, sur un deuxième chemin de transmission de données distinct du premier chemin de transmission de données dans le groupe de chemins de transmission de données, un flux de trafic qui appartient au trafic cible,
dans lequel
la deuxième unité d'émission/réception est également configurée pour recevoir un deuxième message de commande BFD en provenance du dispositif de réseau cible, une adresse IP de destination du deuxième message de commande BFD étant l'adresse IP du dispositif CE, et une adresse IP source du deuxième message de commande BFD étant l'adresse IP du dispositif de réseau cible ; et
l'unité de traitement est également configurée pour répondre au deuxième message de commande BFD pour établir la première session BFD ; et la deuxième unité d'émission/réception est également configurée pour transmettre un troisième message de commande BFD au dispositif de réseau cible, le troisième message de commande BFD étant utilisé pour indiquer que la première session BFD est dans l'état établissement de connexion.

10. Appareil de communication selon la revendication 9, dans lequel
la deuxième unité d'émission/réception est également configurée pour recevoir un premier paquet de données, une adresse IP de destination du premier paquet de données étant l'adresse IP du dispositif CE, et une adresse IP source du premier paquet de données étant l'adresse IP du dispositif de réseau cible ; et
l'unité de traitement est également configurée pour : déterminer si le premier paquet de données est le premier message de commande BFD ; et si le premier paquet de données est le premier paquet de commande BFD, mettre fin au premier paquet de commande BFD.
